# EUROPEAN PATENT APPLICATION

(11) **EP 4 390 816 A1**
(43) Date of publication of application: **26.06.2024**
(21) Application number: 23219383.9
(22) Date of filing: 21.12.2023
(51) Int. Cl.: G06Q 20/10, G06Q 20/22, G06Q 20/32, G06Q 20/40

(54) **DIRECT DEVICE-TO-DEVICE ASSET TRANSFER**

(30) Priority: 22.12.2022 US 202218087230
(71) Applicant: American Express Travel Related Services Company, Inc., New York, NY 10285-4900 (US)
(72) Inventor: BIMOLAKSONO, Lucky, New York, 10285-4900 (US)
(74) Representative: Marks & Clerk LLP

(57) **Abstract**

Disclosed herein are system, method, and computer program product embodiments for direct device-to-device asset transfer. A first user device (e.g., mobile device, smart device, etc.) may send a second user device (e.g., mobile device, smart device, etc.), via a first communication protocol, a portion of allocation information that allocates transaction item to a user of the second user device based on an indication that the second user device is in proximity to the first user device. The first user device may receive an asset from an account associated with the second user device via a second communication protocol based on an indication that the portion of the allocation information that allocates the item associated with the transaction to the user of the second user device is confirmed by the second user device. A value of the asset may correspond to a value indicated by the portion of the allocation information.

## Description

### BACKGROUND

Transaction information may list goods or services being transferred, and a bill or amount due for the goods or services. Sometimes transaction information represents items purchased for multiple people. For example, a charge by a restaurant may represent a meal.

Transaction information listing items for multiple people is routinely resolved by a single payer and/or payment device. The payer and/or payment device divides the total amount due by the number of people to generate an equal amount due for each person, and then sends a payment request to each person. The payer and/or payment device pays the total amount indicated by the transaction information, and then must wait to get reimbursed by the other people, or is never reimbursed.

### BRIEF DESCRIPTION OF THE DRAWINGS

The accompanying drawings are incorporated herein and form a part of the specification.
FIG. 1 is a block of an example system for direct device-to-device asset transfer, according to aspects of this disclosure.
FIG. 2 shows example views of a user interface for direct device-to-device asset transfer, according to aspects of this disclosure.
FIG. 3 shows example views of a user interface for direct device-to-device asset transfer, according to aspects of this disclosure.
FIG. 4 is a flowchart of an example method for direct device-to-device asset transfer, according to aspects of this disclosure.
FIG. 5 is a flowchart of an example method for direct device-to-device asset transfer, according to aspects of this disclosure.
FIG. 6 is an example computer system useful for implementing various aspects of this disclosure.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method, and/or computer program product embodiments, and/or combinations and sub-combinations thereof, for direct device-to-device asset transfer. User devices (e.g., mobile devices, smart devices, etc.) may form peer-to-peer, ad hoc networks to transfer assets between each other. According to aspects of this disclosure, the assets may be used to resolve transactions, confirm negotiations, and/or the like.

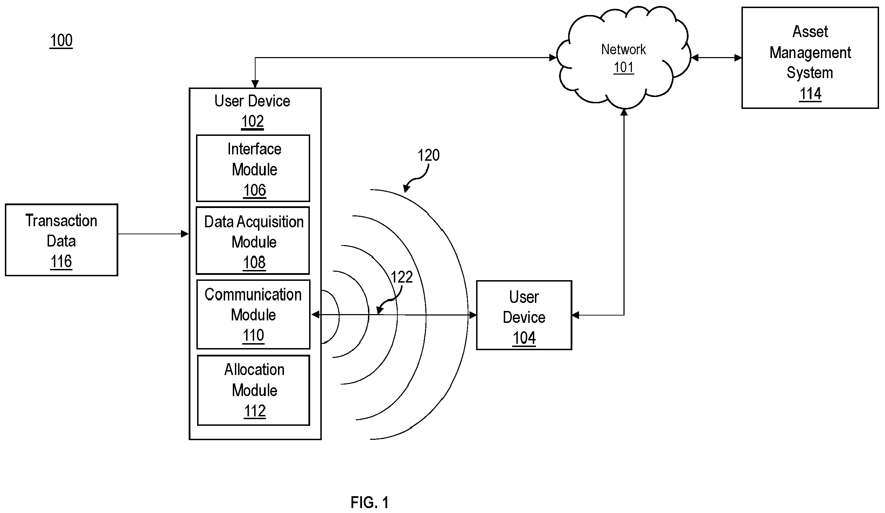

FIG. 1 shows an example system 100 for direct device-to-device asset transfer. System 100 is merely an example of one suitable system environment and is not intended to suggest any limitation as to the scope of use or functionality of aspects described herein. System 100 should not be interpreted as having any dependency or requirement related to any single device/module/component or combination of devices/modules/components described therein.

The system 100 may include a network 101. According to some aspects of this disclosure, network 101 may include a packet-switched network (e.g., internet protocol-based network), a non-packet switched network (e.g., quadrature amplitude modulation-based network), and/or the like. According to some aspects of this disclosure, network 101 may include network adapters, switches, routers, modems, and the like connected through wireless links (e.g., radiofrequency, satellite) and/or physical links (e.g., fiber optic cable, coaxial cable, Ethernet cable, or a combination thereof). According to some aspects of this disclosure, network 101 may include public networks, private networks, wide area networks (e.g., Internet), local area networks, and/or the like. According to some aspects of this disclosure, network 101 may provide and/or support communication from a telephone, cellular phone, modem, and/or other electronic devices to and throughout the system 100. For example, system 100 may include and support communications between user devices 102 and 104 and an asset management system 114 via network 101.

According to some aspects of this disclosure, asset management system 114 may include a payment network, a blockchain network, an asset transferal network, and/or may support/facilitate transactions (e.g., financial transactions, asset exchange transactions, cryptocurrency-related transactions, digital asset-related transactions, etc.).

For example, according to some aspects of this disclosure, asset management system 114 may include a payment network supporting that may provide, facilitate, and/or support one or more applications, and/or protocols, such as Amex^{®} Pay, and the like. According to some aspects of this disclosure, user devices 102 and 104 may be configured to communicate with the payment network of asset management system 114 and transmit pull and push payment requests/messages. For example, the pull and push payment requests/messages may be payment requests/messages associated with transactions, inter-device payment requests and/or funds transferals, and/or the like. According to some aspects of this disclosure, user devices 102 and 104 may be configured with an application and/or an application programming interface (API) that includes services, libraries, code, a combination thereof, and/or the like. The application and/or the API may enable user devices 102 and 104 to communicate with the payment network of asset management system 114 and send pull and push payment messages. For example, user device 104 may send a message to the payment network of asset management system 114 to pull a payment (e.g., an allocated transaction amount, etc.) from an issuer entity (e.g., a device/network associated with a financial institution that issues a payment account, etc.) based on a request from a digital wallet and/or the like of user device 104, and push the pulled payment to a receiving entity (e.g., a device/network associated with a financial institution that issues a payment account, etc.) associated with user device 102, or vice versa, etc.

According to some aspects of this disclosure, asset management system 114 may include a blockchain. The blockchain may be a distributed database that maintains records in a readable manner and that is resistant to tampering. The blockchain may include a system of interconnected blocks containing data. The blocks can hold transfer data, smart contract data, and/or other information (e.g., digital assets, etc.) as desired. Each block may link to the previous block and may include a timestamp. When implemented in support of asset management system 114, the blockchain may serve as an immutable log for API transactions and related communications. According to some aspects of this disclosure, the blockchain may be a peer-to-peer network that is private, consortium, and/or public (e.g., Ethereum, Bitcoin, etc.). Consortium and private networks may offer improved control over the content of the blockchain and public networks (e.g., network 101, etc.) may leverage the cumulative computing power of the network to improve security. According to some aspects of this disclosure, the blockchain may be implemented using technologies, for example, Ethereum GETH, eth-light wallet, or other suitable blockchain interface technologies. The blockchain may be maintained on various nodes in the form of copies of the blockchain. Validation of API transactions may be added to the blockchain by establishing consensus between the nodes based on proof of work, proof of stake, practical byzantine fault tolerance, delegated proof of stake, or other suitable consensus algorithms.

According to some aspects of this disclosure, user device 102 may include a smart device, a mobile device, a computing device, and/or any other device capable of communicating with network 101 and/or device/components in communication with network 101. According to some aspects of this disclosure, although user device 102 is shown and described in greater detail than user device 104, user devices 102 and 104 may be similarly configured and perform similarly and/or execute/operate with the same functionality.

According to some aspects of this disclosure, the user device 102 may include an interface module 106. Interface module 106 enables a user to interact with user device 102, network 101, user device 104, asset management system 114, transaction data 116, and/or any other device/component of the system 100. Interface module 106 may include any interface for presenting and/or receiving information to/from a user.

According to some aspects of this disclosure, interface module 106 may include a web browser, a user interface of an application (e.g., AMEX PAY^{®}, etc.), and/or the like. Other software, hardware, and/or interfaces can be used to provide communication between user device 102, network 101, user device 104, asset management system 114, transaction data 116, and/or any other device/component of the system 100. According to some aspects of this disclosure, interface module 106 may be used to display, request, and/or send data/information from a local source and/or a remote source, such as network 101, user device 104, asset management system 114, transaction data 116, and/or any other device/component of the system 100. According to some aspects of this disclosure, interface module 106 may be and/or may include any interface for presenting and/or receiving information to/from a user.

According to some aspects of this disclosure, interface module 106 may include one or more input devices and/or components, for example, such as a keyboard, a pointing device (e.g., a computer mouse, remote control), a microphone, a joystick, a tactile input device (e.g., touch screen, gloves, etc.), and/or the like. According to some aspects of this disclosure, input devices and/or components of interface 106 may include hardware input devices and/or components, software input devices and/or components, virtual input devices and/or components, physical input devices and/or components, and/or the like. According to some aspects of this disclosure, interaction with the input devices and/or components may enable a user to view, access, request, and/or navigate a user interface generated, accessible, and/or displayed by interface module 106. According to some aspects of this disclosure, interaction with the input devices and/or components may enable a user to manipulate and/or interact with components of a user interface, for example, to allocate portions (e.g., indicated transaction items, etc.) of transaction data to users and/or user devices, to acknowledge and/or identify user devices in proximity to user device 102, to assist in facilitating direct device-to-device asset transfer, and/or the like.

According to some aspects of this disclosure, the user device 102 may include a data acquisition module 108 for capturing and/or receiving data/information. For example, data acquisition module 108 may include an imaging device/component (e.g., a camera, an imaging sensor, etc.), a data source (e.g., a quick response (QR) code, a near field communication (NFC) tag, a barcode, a watermark, transaction data 116, etc.) scanner, and/or the like for capturing and/or receiving data/information, such as transaction data 116.

According to some aspects of this disclosure, data acquisition module 108 may be used to acquire data/information, such as imaging data and/or the like, of transaction data 116. According to some aspects of this disclosure, transaction data 116 may be and/or may include, but is not limited to, a bill for products and/or services rendered, a receipt, a contract, an indication of an engagement arrangement, and/or the like. For example, a user of the user device 102 may position a camera of the data acquisition module 108 to capture image data of transaction data 116 depicting transaction items. According to some aspects of this disclosure, a user of the user device 102 may use data acquisition module 108 to scan and/or decode a QR code (and/or any other encoder indicator) indicative of transaction data 116 depicting transaction items. According to some aspects of this disclosure, a user of the user device 102 may use data acquisition module 108 (and/or any other component of user device 102) to acquire transaction data 116 by any means.

According to some aspects of this disclosure, transaction data 116 may be displayed to a user of user device 102, for example, via interface module 106 and/or the like.

According to some aspects of this disclosure, user device 102 may include a communication module 108 that facilitates and/or enables communication with network 101 (e.g., devices, components, and/or systems of the network 101, etc.), asset management system 114 (e.g., devices, components, and/or systems of asset management system 114, etc.), user device 104, and/or any other device/component of the system 100. According to some aspects of this disclosure, communication module 108 may include any hardware and/or software necessary to facilitate communication including, but not limited to a modem, transceiver (e.g., wireless transceiver, etc.), digital-to-analog converter, analog-to-digital converter, encoder, decoder, modulator, demodulator, tuner (e.g., QAM tuner, QPSK tuner), and/or the like. For example, communication module 108 may include multiple radio interfaces that support various wireless communication protocols and/or standards (e.g., Wi-Fi, BLUETOOTH^{™}, LTE, LTE-A, ZigBee, Ant+, near field communications (NFC), UWB (Ultra-wideband), 3G, 4G, 5G, PCS, GSM, etc.). Accordingly, the UE may need to simultaneously operate multiple radio interfaces corresponding to multiple wireless communication protocols and/or standards. According to some aspects of this disclosure, communication module 108 enables wireless, peer-to-peer, ad hoc, automatic, self-configuring high-speed networking between user devices.

According to some aspects of this disclosure, communication module 108 may use a first communication protocol 120 (e.g., Bluetooth, NFC, etc.) to detect, determine, and/or identify user devices, for example, user device 104 in proximity to user device 102. According to some aspects of this disclosure, communication module 108 may detect, determine, and/or identify user devices, for example, user device 104 in proximity to user device 102 in response to activation and/or the initiation of an application (e.g., AMEX PAY^{®}, etc.) and/or the like configured with user device 102.

For example, according to some aspects of this disclosure, a user of the user device 102 may activate and/or initiate an application (e.g., AMEX PAY^{®}, etc.) and/or the like configured with user device 102 and use data acquisition module 108 and/or the like to acquire transaction data 116 depicting transaction items. According to some aspects of this disclosure, communication module 108 may use first communication protocol 120 to detect, determine, and/or identify user devices, for example, user device 104 that are identified within a contact list and/or the like of user device 102 and also have an identifier detected, determined, and/or identified to be in proximity to user device 102. According to some aspects of this disclosure, indicators of user devices detected, determined, and/or identified to be in proximity to user device 102 via first communication protocol 120 may be displayed via interface module 106 and/or the like.

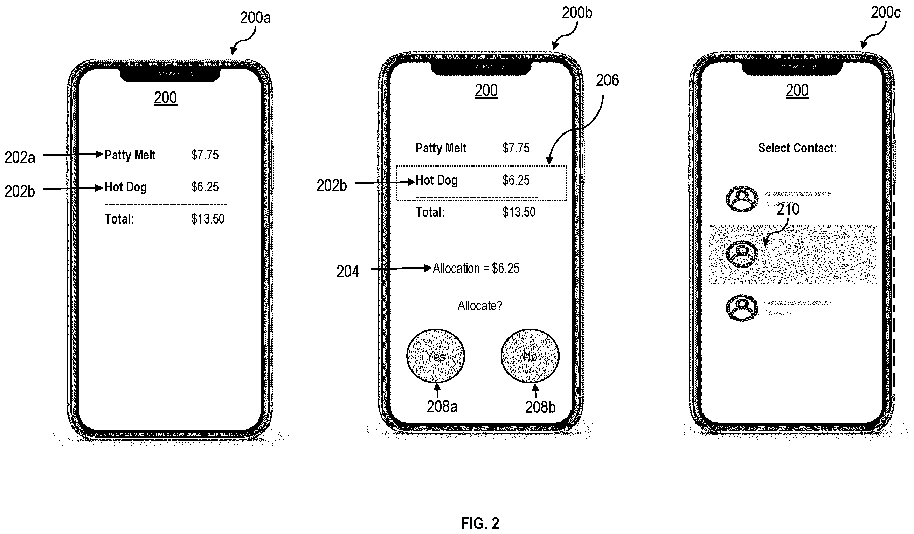

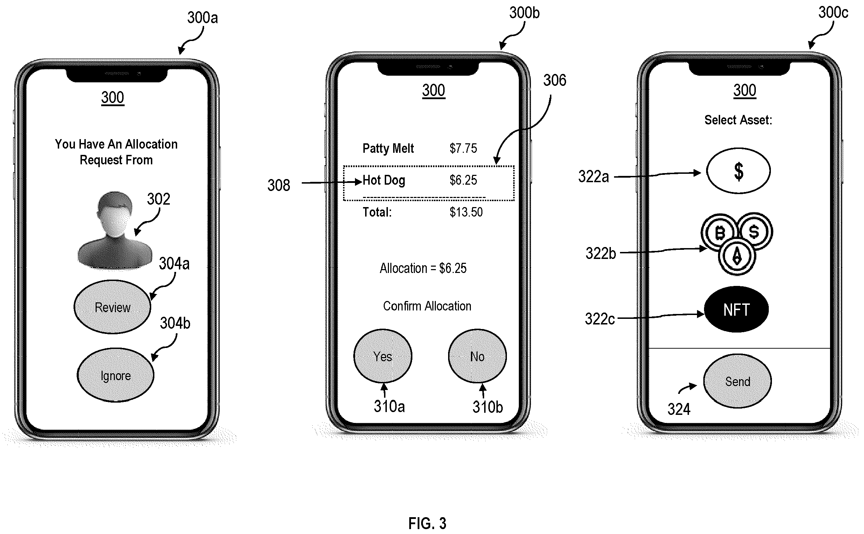

According to some aspects of this disclosure, communication module 110 may use a second communication protocol 122 (e.g., Ultra-wideband (UWB), Wi-Fi Direct, peer-to-peer Wi-Fi, Nearby Share, Multipeer Connectivity, infrared, etc.) to facilitate a peer-to-peer, ad hoc, and high-speed network between user device 102 and any user device detected, determined, and/or identified, for example, user device 104, via first protocol 120 and/or selected and/or identified via interaction with interface module 106 and/or the like. Ultra-wideband is a radio technology that can use a very low energy level for short-range, high-bandwidth communications over a large portion of the radio spectrum. An example is an AWDL (Apple Wireless Direct Link) communications protocol, which is a low latency/high-speed WiFi peer-to peer-connection used in the AIRDROP communication product available from Apple Inc. of Cupertino, CA. For example, as described in greater detail later herein in reference to FIG. 2 and FIG. 3, a user device (e.g., user device 104, etc.) may be detected, determined, and/or identified via first protocol 120 and/or selected and/or identified via interaction with interface module 106 to facilitate direct device-to-device asset transfer via second communication protocol 122.

According to some aspects of this disclosure, second communication protocol 122 enables a peer-to-peer wireless transfer between user device 102 and user device 104 based on identity data communicated between user device 102 and user device 104 via first communication protocol 120. For example, if user device 104 is detected, determined, and/or identified by user device 102, user device 102 and user device 104 may negotiate and/or exchange cryptographic identifiers (e.g., a hashed and/or encrypted device identifier, a hashed and/or encrypted user identifier, etc.). The cryptographic identifiers may then be used to establish a direct wireless connection between user device 102 and user device 104. For example, the cryptographic identifiers may be used to establish an encrypted Transport Layer Security (TLS) and/or the like. According to some aspects of this disclosure, second communication protocol 122 may provide latency, throughput, and power-efficiency advantages relative to first communication protocol 120.

According to some aspects of this disclosure, to manage asset transferal, user device 102 may include an allocation module 112. According to some aspects of this disclosure, allocation module 112 may be initiated, supported by, in communication with, and/or the like an application (e.g., AMEX PAY^{®}, etc.) and/or the like configured with user device 102. According to some aspects of this disclosure, allocation module 112 may include and/or be associated with a digital wallet. The digital wallet may include payment information and passwords associated with the user device 102 (e.g., associated with a user of the user device 102). For example, the digital wallet may include payment card information. The payment card may be associated with a primary account number (PAN). According to some aspects of this disclosure, the PAN may be tokenized for security. According to some aspects of this disclosure, the PAN associated with the user device 102 may be stored by asset management system 114 (e.g., a payment network configured with, supported by, and/or enabled by asset management system 114, etc.) in a database record linked to a payment account (and/or user profile) associated with a user (e.g., a user associated with and/or using the user device 102, etc.). The payment account may be maintained/controlled by asset management system 114 (e.g., via an entity of asset management system 114, AMEX^{®}, etc.). As previously described, asset management system 114 may include and/or be part of a device/network associated with a financial institution that issues payment accounts. According to some aspects of this disclosure, monetary assets and/or the like may be transferred between payment accounts associated with user device 102 and user device 104 (and/or users of user device 102 and user device 104, etc.).

According to some aspects of this disclosure, allocation module 112 may include and/or be associated with a crypto wallet (e.g., software, hardware, and/or the like that enables user device 102 to store and use cryptocurrency, etc.). According to some aspects of this disclosure, a crypto wallet may be an on-chain crypto wallet, an off-chain crypto wallet (e.g., a cold wallet, a warm wallet, etc.), and/or the like. For example, according to some aspects of this disclosure, may be a crypto wallet may enable and/or facilitate digital assets to be stored (e.g., securely stored, etc.) locally on a storage of and/or associated with the user device 102. According to some aspects of this disclosure, a crypto wallet enables transactions to occur with a username and/or identifier that can be associated with a public key address on a blockchain of asset management system 114. According to some aspects of this disclosure, user device 102 may utilize a crypto wallet to send and/or receive cryptocurrency assets, payments, and/or the like. The crypto wallet can be used to store a user's public and private keys for accessing and using cryptocurrency. According to some aspects of this disclosure, in scenarios where the crypto wallet includes an off-chain crypto wallet, digital assets may be in custody of the user device 102 (and/or user of the user device 102) and stored locally by secure element 113 and/or another storage element of and/or associated with the user device 102. According to some aspects of this disclosure, cryptocurrencies (e.g., Bitcoin, Ethereum, etc.), crypto tokens (e.g., ERC-20, Dogecoin, etc.), and/or the like may be transferred between crypto wallets and/or crypto accounts associated with user device 102 and user device 104 (and/or users of user device 102 and user device 104, etc.).

According to some aspects of this disclosure, user device 102 may include a secure element 113. According to some aspects of this disclosure, secure element 113 is configured to be protected from unauthorized access and may be used by the user device 102 to interact/communicate with allocation module 112 to manage and/or store confidential data, cryptographic data, and/or the like. According to some aspects of this disclosure, secure element 113 may enable trusted applications, device components (e.g., digital wallets, crypto wallets, etc.) and/or devices (e.g., POS terminals, merchant devices, loan management terminals, etc.) to read and/or write access to storage and/or data of the secure element 113. According to some aspects of this disclosure, secure element 113 may be configured to detect and/or identify any hacking and/or modification attempts, perform cryptographic functions including, but not limited to cryptographically secure generation of random numbers and/or keys (e.g., pairs of private and public keys for asymmetric encryption, etc.). According to some aspects of this disclosure, secure element 113 may include secure memory for storing private encryption keys, bank card details, digital assets, and/or any other information securely. According to some aspects of this disclosure, secure element 113 may store keys for digitally signing documents or other data, as well as generating a signature. According to some aspects of this disclosure, secure element 113 may store and/or facilitate cryptocurrency wallets and/or the like. According to some aspects of this disclosure, secure element 113 may store biometric data/information and/or facilitate safe storage and/or transfer of sensitive data.

According to some aspects of this disclosure, allocation module 112 may be activated and/or initiated responsive to user device 102 receiving transaction data 116 indicating a transaction. According to some aspects of this disclosure, allocation module 112 may be used to determine, calculate, and/or identify allocation information for the transaction data 116. According to some aspects of this disclosure, allocation module 112 enables user device 102 to receive an asset from an account associated with user device 104, for example, via second communication protocol 122 based on an indication that a portion of allocation information that allocates a transaction item indicated by transaction data 116 item to a user of user device 104 is confirmed by user device 104. According to some aspects of this disclosure, the value of any asset (e.g., cryptocurrencies and/or crypto tokens, fractional cryptocurrencies and/or crypto tokens, monetary assets, collateral items, personal identifiers and/or digital signatures, etc.) received by allocation module 112 may correspond to a value indicated by allocation information determined, calculated, and/or identified via allocation module 112.

FIG. 2 shows example views 200a, 200b, 200c, and 200c of a user interface 200 of user device 102 for direct device-to-device asset transfer, according to some aspects of this disclosure. According to some aspects of this disclosure, view 200a displays indications 201 of user devices (and/or users) that are associated with the user device 102. For example, view 200a displays indications 201 of user devices (and/or users) that are indicated (e.g., via a phone number, email address, device identifier, user identifier, etc.) by contact information (and/or the like) of user device 102 and configured (e.g., via an application, etc.) for direct device-to-device asset transfer.

According to some aspects of this disclosure, view 200b may be displayed by user device 102 whenever transaction data 116 is received. According to some aspects of this disclosure, view 200b may indicate transaction items 202a and 202b.

According to some aspects of this disclosure, view 200c shows a portion of allocation information 204 (e.g., generated by allocation module 112, etc.). According to some aspects of this disclosure, user device 102 may receive based on an interaction with user interface 200 by a user of user device 102. For example, a user of user device 102 may make a selection 206 transaction item 202b. According to some aspects of this disclosure, allocation module 112 may generate the portion of allocation information 204 with an allocation amount (e.g., $6.25, etc.) that corresponds to a price/cost (e.g., $6.25, etc.) of transaction item 202b based on selection 206. Although not shown here for simplicity, allocation module 11 may also determine/calculate tax, gratuity, and/or surcharge associated with transaction item 202b and include such with the portion of allocation information 204. According to some aspects of this disclosure, view 200c may include interactive elements 208a and 208b that, when interacted with, enable confirmation or denial, respectively of any allocation information generated by allocation module 112 and/or displayed via view 200c.

According to some aspects of this disclosure, view 200d shows an example of user interface 200 once interactive element 208a has been selected to allocate the portion of allocation information 204 to a user to split/share responsibility in resolving a transaction amount (e.g, $13.50, etc.) indicated by transaction data 116. According to some aspects of this disclosure, view 200d displays indications of user devices that are associated with and/or indicated by contact information (and/or the like) of the user device 102 within proximity to the user device 102. For example, an indication of a user 210 of user device 104 based on an identifier (e.g., phone number, email address, device identifier, user identifier, etc.) of and/or associated with user 210 being stored in contact information (e.g., accessed by allocation module 112, etc.) of user device 102 and an identifier of user device 104 is detected, determined, and/or identified in proximity to user device 102 via first communication protocol 120. According to some aspects of this disclosure, the identified user devices that are associated with and/or indicated by contact information (and/or the like) of the user device 102 within proximity to the user device 102 may also be configured for direct device-to-device asset transfer. According to some aspects of this disclosure, selection (via interaction, etc.) of the indication of user 210 may map the indication of user 210 to transaction item 202b and/or the portion of allocation information 204. According to some aspects of this disclosure, user device 102 may send an indication of the portion of allocation information 204 to user device 104. For example, user device 102 may send an allocation request (e.g., a request for an asset, a payment request, etc.) to user device 104 for an asset to resolve the portion of allocation information 204.

FIG. 3 shows example views 300a, 300b, and 300c of a user interface 300 of user device 104 for direct device-to-device asset transfer, according to some aspects of this disclosure. View 300a may be displayed by user device 104 responsive to user device 102 sending an indication of a portion of allocation information to user device 104. For example, user device 102 may send an allocation request to user device 102 for an asset to resolve at least a portion of allocation information View 300a may include an indicator 302 of user device 102 to enable a user of user device 104 to identify who is sending the allocation request. Interaction with interactive elements 304a and 304b enable a user of user device 104 to review an allocation request or ignore/deny the request, respectively.

According to some aspects of this disclosure, view 300b may be displayed based on interaction with interactive element 304a and may include an indication of transaction data (e.g., transaction data 116) with an indicator 306 of a transaction item 308 (e.g., transaction item 202b) that has been allocated to user device 104 (a user of user device 104, etc.). According to some aspects of this disclosure, view 200b shows a portion of allocation information 310 (e.g., generated by allocation module 112, etc.) that has been allocated to user device 104 (a user of user device 104, etc.). According to some aspects of this disclosure, view 300b may include interactive elements 310a and 310b that, when interacted with, enable confirmation and/or denial of any allocation information generated by allocation module 112 and/or displayed via view 300b. In other words, user device 104 may display the received allocation request, review the allocation request for accuracy, then confirm the allocation request is accurate.

According to some aspects of this disclosure, view 300c shows an example of user interface 300 once interactive element 310a has been selected to confirm the allocation of the portion of allocation information to the user of user device 104 to split/share responsibility in resolving the transaction amount (e.g., $13.50, etc.) indicated by transaction data 116. Interactive asset elements 322a-c may be selected via interaction as an asset to be used in providing the requested allocation to user device 102. Interactive asset elements may include, but are not limited to, indicators for monetary assets, cryptocurrency assets, non-fungible tokens, contextual lending offers, and/or the like.

According to some aspects of this disclosure, once an asset indicated by interactive asset elements 322a-c has been selected, an interactive send element 324 may be interacted to cause the asset to be sent to user device 102. For example, a selected asset may be sent from an account associated with user device 104 to an account associated with user device 104 via second communication protocol 122 of FIG. 1. According to some aspects of this disclosure, a value of the selected asset may correspond to a value indicated by the allocation request. According to some aspects of this disclosure, sending the asset to user device 102 via second communication protocol 122 may include security features (e.g., encryption, SSL and/or TSL protocols, an authentication scheme, device negotiations, etc.). Any asset transferals may be authenticated, verified, approved, underwritten, reviewed, and/or approved by one or more entities of asset management system 114.

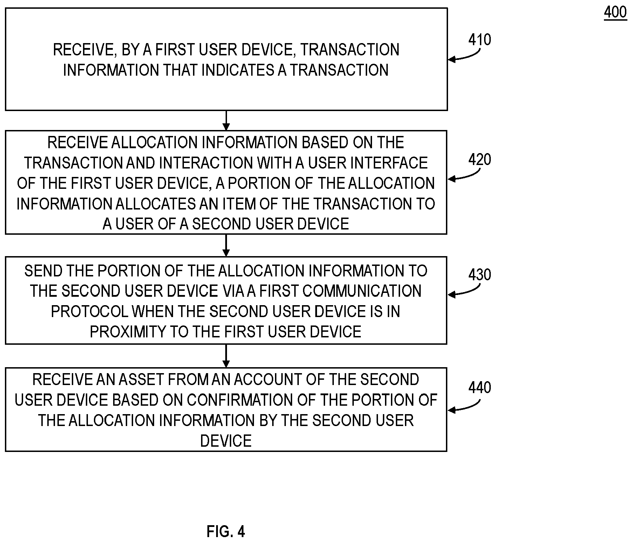

FIG. 4 shows a flowchart of an example method 400 for direct device-to-device asset transfer, according to some aspects of this disclosure. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art. Method 400 shall be described with reference to FIGs. 1-3. However, method 400 is not limited to the aspects of those figures.

In 410, user device 102 receives transaction information that indicates a transaction. According to some aspects of this disclosure, user device 102 receiving the transaction information includes, but is not limited to, user device 102 receiving image data that indicates the transaction information, user device 102 receiving the transaction information from a merchant device (e.g., based on a near-field communication (NFC) transaction with a merchant POS device, based on a Bluetooth beacon from a merchant device, based on an email from a merchant device, etc.), user device 102 decoding an encoded indicator (e.g., a QR code, etc.) of the transaction information, and/or the like.

In 420, user device 102 receives allocation information. According to some aspects of this disclosure, user device 102 may receive the allocation information based on the indicated transaction and interaction with a user interface of user device 102. According to some aspects of this disclosure, a portion of the allocation information allocates an item associated with the transaction to a user of user device 104. According to some aspects of this disclosure, user device 102 may receive the allocation information based on causing display of the transaction information that indicates the transaction via the user interface of t user device 102. According to some aspects of this disclosure, user device 102 may cause a display of an indication of the user of user device 104 based on an identifier of the user of user device 104 being indicated by contact information for user device 102 corresponding to an identifier of the user device 104 that is detected via a first communication protocol, such as any short-range communication protocol, when user device 104 is in proximity to user device 102. According to some aspects of this disclosure, user device 102 may receive the allocation information based on the interaction with the user interface. According to some aspects of this disclosure, the interaction with the user interface may map the indication of the user of user device 104 to the item associated with the transaction. According to some aspects of this disclosure, a portion of the allocation information allocates an item associated with the transaction to the user of user device 104.

In 430, user device 102 sends the portion of the allocation information that allocates the item associated with the transaction to the user of the second user device to the second user device via the first communication protocol. According to some aspects of this disclosure, user device 102 may send the portion of the allocation information to user device 104 based on an indication that user device 104 is in proximity to user device 102.

In 440, user device 102 receives an asset from an account associated with the second user device via a second communication protocol. According to some aspects of this disclosure, the asset may include, but is not limited to, a monetary asset (e.g., an amount of funds, etc.), a digital asset (e.g., non-fungible tokens, cryptocurrencies, cryptocurrency tokens, etc.), an electronic/digital signature/identifier, and/or the like. According to some aspects of this disclosure, an asset may include anything that is created, identifiable, transferable, and has or provides value. For example, according to some aspects of this disclosure, a transaction may be a negotiation and/or arrangement between parties (user devices 102 and 104), and an asset exchanged may be a digital signature, metadata, content, and/or the like used to resolve the transaction. According to some aspects of this disclosure, a transaction may be based on a consumer item (e.g., a meal, a service, etc.) shared between parties (user devices 102 and 104), and an asset exchanged may be a monetary asset, an amount of funds, cryptocurrency (e.g., whole/fractionalized portions of Bitcoin, Ethereum, and/or the like) and/or the like used to resolve the transaction. According to some aspects of this disclosure, a transaction may be an agreement to perform a service or a commitment to a contractual obligation shared between parties (user devices 102 and 104), and an asset exchanged may be an electronic initial, a digital signature, electronic verification data, and/or the like. According to some aspects of this disclosure, an asset may be any digital data constituting a medium of exchange or instructing a transfer of a medium of exchange. A medium of exchange may be any item that is widely accepted in exchange for goods and/or services. An example of a medium of exchange is currency. According to some aspects of this disclosure, an asset may be anything that may be exchanged and/or has value.

According to some aspects of this disclosure, the second communication protocol may enable a peer-to-peer wireless transfer between the first user device and the second user device. The peer-to-peer wireless transfer between the first user device and the second user device may be established without a need for authentication and/or negotiation communications between the first user device and the second user device. For example, the peer-to-peer wireless transfer between the first user device and the second user device may be based on negotiation data generated for the first communication protocol. According to some aspects of this disclosure, the second communication protocol may include, but is not limited to, ultra-wideband and/or any other high-speed wireless data transfer protocol. According to some aspects of this disclosure, user device 102 receives the asset from the account (e.g., digital wallet, blockchain wallet, asset account, financial account, etc.) associated with the second user device via the second communication protocol based on an indication that the portion of the allocation information that allocates the item associated with the transaction to the user of user device 104 is confirmed by user device 104. According to some aspects of this disclosure, a value of the asset may correspond to a value indicated by the portion of the allocation information.

According to some aspects of this disclosure, user device 102 receiving the asset from the account associated with user device 104 may include user device 102 sending a signal/instruction that causes a user interface of user device 104 to display an interactive notification that indicates the portion of the allocation information that allocates the item associated with the transaction to the user of user device 104. According to some aspects of this disclosure, user device 102 may receive the indication that the portion of the allocation information that allocates the item associated with the transaction to the user of user device 104 is confirmed based on an interaction by user device 104 (a user of user device 104, etc.) with the interactive notification displayed by the user interface of user device 104.

According to some aspects of this disclosure, method 400 may further include user device 102 sending at least one of the asset or the value of the asset to a merchant device. For example, the merchant device may be associated with the transaction.

According to some aspects of this disclosure, method 400 may further include user device 102 receiving a request from user device 104 to modify the portion of the allocation information that allocates the item associated with the transaction to the user of user device 104. According to some aspects of this disclosure, user device 102 sends at least a portion of the asset to user device 104 based on the request to modify the portion of the allocation information.

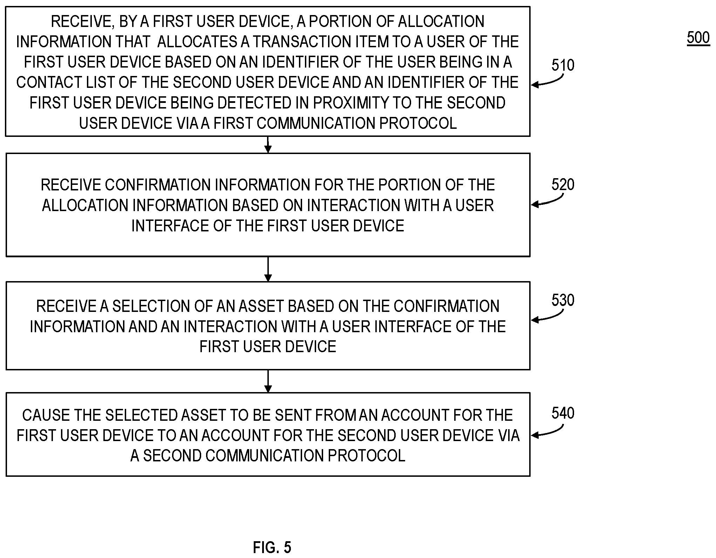

FIG. 5 shows a flowchart of an example method 500 for direct device-to-device asset transfer, according to some aspects of this disclosure. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art. Method 500 shall be described with reference to FIGs. 1-3. However, method 500 is not limited to the aspects of those figures.

In 510, user device 104 receives an indication of a portion of allocation information that allocates a transaction item to a user of user device 104. According to some aspects of this disclosure, user device 104 receives the indication of the portion of the allocation information that allocates the transaction item to the user of user device 104 based on an identifier (e.g., phone number, email address, device identifier, user identifier, etc.) of a user of user device 104 indicated by contact information for user device 102 corresponding to an identifier of user device 104 detected via a first communication protocol by user device 102 when user device 104 is in proximity to user device 102.

In 520, user device 104 receives confirmation information for the portion of the allocation information that allocates the transaction item to the user. According to some aspects of this disclosure, user device 104 receives the confirmation information based on an interaction with a user interface of user device 104.

In 530, user device 104 receives a selection of an asset. According to some aspects of this disclosure, user device 104 receives the selection of the asset based on the confirmation information and interaction with a user interface of user device 102.

In 540, user device 104 causes the selected asset to be sent from an account associated with user device 104 via a second communication protocol. According to some aspects of this disclosure, an asset may include anything that is created, identifiable, transferable, and has or provides value. For example, according to some aspects of this disclosure, a transaction may be a negotiation and/or arrangement between parties (user devices 102 and 104), and an asset exchanged may be a digital signature, metadata, content, and/or the like used to resolve the transaction. According to some aspects of this disclosure, a transaction may be based on a consumer item (e.g., a meal, a service, etc.) shared between parties (user devices 102 and 104), and an asset exchanged may be a monetary asset, an amount of funds, cryptocurrency (e.g., whole/fractionalized portions of Bitcoin, Ethereum, and/or the like) and/or the like used to resolve the transaction. According to some aspects of this disclosure, a transaction may be an agreement to perform a service or a commitment to a contractual obligation shared between parties (user devices 102 and 104), and an asset exchanged may be an electronic initial, a digital signature, electronic verification data, and/or the like. According to some aspects of this disclosure, an asset may be any digital data constituting a medium of exchange or instructing a transfer of a medium of exchange. A medium of exchange may be any item that is widely accepted in exchange for goods and/or services. An example of a medium of exchange is currency. According to some aspects of this disclosure, an asset may be anything that may be exchanged and/or has value.

According to some aspects of this disclosure, the second communication protocol may enable a peer-to-peer wireless transfer between the first user device and the second user device. The peer-to-peer wireless transfer between the first user device and the second user device may be established without a need for authentication and/or negotiation communications between the first user device and the second user device. For example, the peer-to-peer wireless transfer between the first user device and the second user device may be based on identity data (e.g., a hashed identifier, etc.) generated for the first communication protocol. For example, the identify data may be a hash of an email address, phone number, and/or any other identifier associated with user devices 102 and 104. According to some aspects of this disclosure, the second communication protocol may include, but is not limited to, ultra-wideband and/or any other high-speed wireless data transfer protocol. According to some aspects of this disclosure, user device 102 receives the asset from the account (e.g., digital wallet, blockchain wallet, asset account, financial account, etc.) associated with the second user device via the second communication protocol based on an indication that the portion of the allocation information that allocates the item associated with the transaction to the user of user device 104 is confirmed by user device 104. According to some aspects of this disclosure, a value of the asset may correspond to a value indicated by the portion of the allocation information.

According to some aspects of this disclosure, method 500 may further include user device 104 sending user device 102 a request to modify the portion of the allocation information that allocates transaction item to the user of user device 104. According to some aspects of this disclosure, user device 104 receives at least a portion of the selected asset from user device 102 based on the request to modify the portion of the allocation information. According to some aspects of this disclosure, the selected asset may include at least one of an amount of funds or a digital asset.

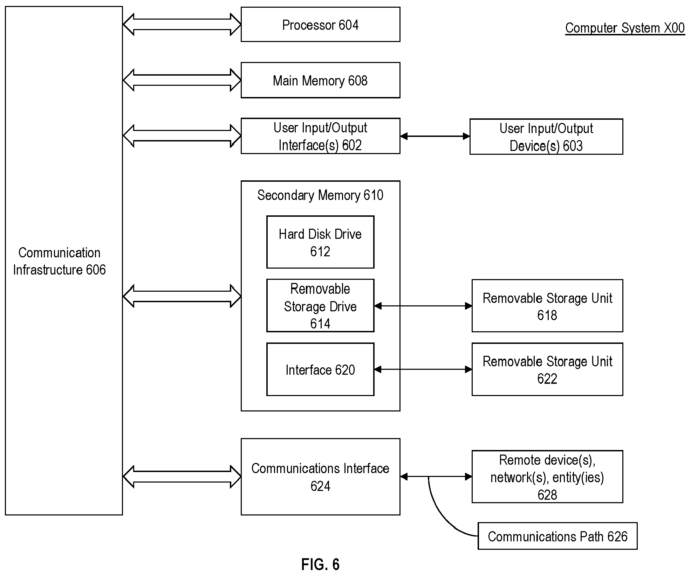

Various embodiments may be implemented, for example, using one or more well-known computer systems, such as computer system 600 shown in FIG. 6. One or more computer systems 600 may be used, for example, to implement any of the embodiments discussed herein, as well as combinations and sub-combinations thereof.

Computer system 600 may include one or more processors (also called central processing units, or CPUs), such as processor 604. Processor 604 may be connected to a bus or a communication infrastructure 606.

Computer system 600 may also include user input/output device(s) 603, such as monitors, keyboards, pointing devices, etc., which may communicate with a bus or communication infrastructure 606 through user input/output device(s) 603.

One or more of processors 604 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 600 may also include a main or primary memory 608, such as random access memory (RAM). Main memory 608 may include one or more levels of cache. Main memory 608 may have stored therein control logic (i.e., computer software) and/or data.

Computer system 600 may also include one or more secondary storage devices or secondary memory 610. Secondary memory 610 may include, for example, a hard disk drive 612 and/or a drive or a removable storage device 614. Removable storage drive 614 may be a floppy disk drive, a magnetic tape drive, a compact disk drive, an optical storage device, a tape backup device, and/or any other storage device/drive.

Removable storage drive 614 may interact with a removable storage unit 618. The removable storage unit 618 may include a computer-usable or readable storage device having stored thereon computer software (control logic) and/or data. Removable storage unit 618 may be a floppy disk, magnetic tape, compact disk, DVD, optical storage disk, and/ any other computer data storage device. Removable storage drive 614 may read from and/or write to the removable storage unit 618.

Secondary memory 610 may include other means, devices, components, instrumentalities, and/or other approaches for allowing computer programs and/or other instructions and/or data to be accessed by computer system 600. Such means, devices, components, instrumentalities, and/or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface. According to some aspects of this disclosure, secondary memory 610 (and/or ancillary memory) may include secure elements or the like, that not only a secure element to store phrasekey and other security credentials, but also storing digital assets in off-chain environment for the case of cold/warm wallets and/or the like.

Computer system 600 may further include a communication or network interface 624. Communications interface 624 may enable computer system 600 to communicate and interact with any combination of external devices, external networks, external entities, etc. (individually and collectively referenced by reference number 628). For example, communications interface 624 may allow computer system 600 to communicate with external or remote devices 628 over communications path 626, which may be wired and/or wireless (or a combination thereof), and which may include any combination of LANs, WANs, the Internet, etc. Control logic and/or data may be transmitted to and from computer system 600 via communications path 626.

Computer system 600 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 600 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 600 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML, User Interface Language (XUL), or any other functionally similar representations alone or in combination. Alternatively, proprietary data structures, formats, and/or schemas may be used, either exclusively or in combination with known or open standards.

In some aspects, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 600, main memory 608, secondary memory 610, and removable storage units 618 and 622, as well as tangible articles of manufacture embodying any combination of the foregoing. Such control logic, when executed by one or more data processing devices (such as computer system 600), may cause such data processing devices to operate as described herein.

Based on the teachings contained in this disclosure, it will be apparent to persons skilled in the relevant art(s) how to make and use embodiments of this disclosure using data processing devices, computer systems, and/or computer architectures other than that shown in FIG. 6. In particular, embodiments can operate with software, hardware, and/or operating system implementations other than those described herein.

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

Additionally and/or alternatively, while this disclosure describes exemplary embodiments for exemplary fields and applications, it should be understood that the disclosure is not limited thereto. Other embodiments and modifications thereto are possible and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

One or more parts of the above implementations may include software. Software is a general term whose meaning includes specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some aspects can be described using the expression "coupled" and "connected" along with their derivatives. These terms are not necessarily intended as synonyms for each other. For example, some aspects can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

Further embodiments are set out in the following clauses:
1. A non-transitory computer-readable medium having instructions stored thereon that, when executed by at least one computing device, causes the at least one computing device to perform operations for direct device-to-device asset transfer, the operations comprising: receiving, by a first user device, transaction information that indicates a transaction; receiving, based on the indicated transaction and an interaction with a user interface of the first user device, allocation information, wherein a portion of the allocation information allocates an item associated with the transaction to user of a second user device; sending, based on an indication that the second user device is in proximity to the first user device, the portion of the allocation information that allocates the item associated with the transaction to the user of the second user device, to the second user device via a first communication protocol; and receiving, based on an indication that the portion of the allocation information that allocates the item associated with the transaction to the user of the second user device is confirmed by the second user device, an asset from an account associated with the second user device via a second communication protocol that enables a peer-to-peer wireless transfer between the first user device and the second user device based on identity data communicated between the first user device and the second user device via the first communication protocol, wherein a value of the asset corresponds to a value indicated by the portion of the allocation information.
2. The non-transitory computer-readable medium of clause 15, wherein the receiving the transaction information that indicates the transaction comprises at least one of receiving image data that indicates the transaction, receiving the transaction information from a merchant device, or decoding an encoded indicator of the transaction information.
3. The non-transitory computer-readable medium of clause 15, wherein the receiving the allocation information further comprises: causing display of the transaction information that indicates the transaction via the user interface of the first user device; causing, based on an identifier of the user of the second user device indicated by contact information for the first user device corresponding to an identifier of the second user device detected via the first communication protocol, display of an indication of the user of the second user device; and receiving, based on the interaction with the user interface, the allocation information, wherein the interaction with the user interface maps the indication of the user of the second user device to the item associated with the transaction.
4. The non-transitory computer-readable medium of clause 15, the operations further comprising sending, to a merchant device, at least one of the asset or the value of the asset.
5. The non-transitory computer-readable medium of clause 15, the operations further comprising: receiving, by the first user device, a request from the second user device to modify the portion of the allocation information that allocates the item associated with the transaction to the user of the second user device; and sending, based on the request to modify the portion of the allocation information, at least a portion of the asset to the second user device.
6. The non-transitory computer-readable medium of clause 15, wherein the receiving the asset from the account associated with the second user device further comprises: causing, via a user interface of the second user device; display of an interactive notification that indicates the portion of the allocation information that allocates the item associated with the transaction to the user of the second user device; and receiving, based on an interaction with the interactive notification, the indication that the portion of the allocation information that allocates the item associated with the transaction to the user of the second user device is confirmed.

The breadth and scope of this disclosure should not be limited by any of the above-described exemplary embodiments, but should be defined only in accordance with the following claims and their equivalents.

## Claims

1. A method for direct device-to-device asset transfer comprising:
receiving, by a first user device, transaction information that indicates a transaction;
receiving, based on the indicated transaction and an interaction with a user interface of the first user device, allocation information, wherein a portion of the allocation information allocates an item associated with the transaction to user of a second user device;
sending, based on an indication that the second user device is in proximity to the first user device, the portion of the allocation information that allocates the item associated with the transaction to the user of the second user device, to the second user device via a first communication protocol; and
receiving, based on an indication that the portion of the allocation information that allocates the item associated with the transaction to the user of the second user device is confirmed by the second user device, an asset from an account associated with the second user device via a second communication protocol that enables a peer-to-peer wireless transfer between the first user device and the second user device based on identity data communicated between the first user device and the second user device via the first communication protocol, wherein a value of the asset corresponds to a value indicated by the portion of the allocation information.

2. The method of claim 1, wherein the receiving the transaction information that indicates the transaction comprises at least one of receiving image data that indicates the transaction, receiving the transaction information from a merchant device, or decoding an encoded indicator of the transaction information.

3. The method of claim 1, wherein the receiving the allocation information further comprises:
causing display of the transaction information that indicates the transaction via the user interface of the first user device;
causing, based on an identifier of the user of the second user device indicated by contact information for the first user device corresponding to an identifier of the second user device detected via the first communication protocol, display of an indication of the user of the second user device; and
receiving, based on the interaction with the user interface, the allocation information, wherein the interaction with the user interface maps the indication of the user of the second user device to the item associated with the transaction.

4. The method of claim 1, wherein the asset comprises at least one of a cryptocurrency token or a non-fungible token.

5. The method of claim 1, further comprising sending, to a merchant device, at least one of the asset or the value of the asset.

6. The method of claim 1, further comprising:
receiving, by the first user device, a request from the second user device to modify the portion of the allocation information that allocates the item associated with the transaction to the user of the second user device; and
sending, based on the request to modify the portion of the allocation information, at least a portion of the asset to the second user device.

7. The method of claim 1, wherein the receiving the asset from the account associated with the second user device further comprises:
causing, via a user interface of the second user device; display of an interactive notification that indicates the portion of the allocation information that allocates the item associated with the transaction to the user of the second user device; and
receiving, based on an interaction with the interactive notification, the indication that the portion of the allocation information that allocates the item associated with the transaction to the user of the second user device is confirmed.

8. A system for direct device-to-device asset transfer, the system comprising:
a memory; and
a processor coupled to the memory and configured to perform operations comprising:
receiving, by a first user device, transaction information that indicates a transaction;
receiving, based on the indicated transaction and an interaction with a user interface of the first user device, allocation information, wherein a portion of the allocation information allocates an item associated with the transaction to user of a second user device;
sending, based on an indication that the second user device is in proximity to the first user device, the portion of the allocation information that allocates the item associated with the transaction to the user of the second user device, to the second user device via a first communication protocol; and
receiving, based on an indication that the portion of the allocation information that allocates the item associated with the transaction to the user of the second user device is confirmed by the second user device, an asset from an account associated with the second user device via a second communication protocol that enables a peer-to-peer wireless transfer between the first user device and the second user device based on identity data communicated between the first user device and the second user device via the first communication protocol, wherein a value of the asset corresponds to a value indicated by the portion of the allocation information.

9. The system of claim 8, wherein the receiving the transaction information that indicates the transaction comprises at least one of receiving image data that indicates the transaction, receiving the transaction information from a merchant device, or decoding an encoded indicator of the transaction information.

10. The system of claim 8, wherein the receiving the allocation information further comprises:
causing display of the transaction information that indicates the transaction via the user interface of the first user device;
causing, based on an identifier of the user of the second user device indicated by contact information for the first user device corresponding to an identifier of the second user device detected via the first communication protocol, display of an indication of the user of the second user device; and
receiving, based on the interaction with the user interface, the allocation information, wherein the interaction with the user interface maps the indication of the user of the second user device to the item associated with the transaction.

11. The system of claim 8, wherein the asset comprises at least one of a cryptocurrency token or a non-fungible token.

12. The system of claim 8, the operations further comprising sending, to a merchant device, at least one of the asset or the value of the asset.

13. The system of claim 8, the operations further comprising:
receiving, by the first user device, a request from the second user device to modify the portion of the allocation information that allocates the item associated with the transaction to the user of the second user device; and
sending, based on the request to modify the portion of the allocation information, at least a portion of the asset to the second user device.

14. The system of claim 8, wherein the receiving the asset from the account associated with the second user device further comprises:
causing, via a user interface of the second user device; display of an interactive notification that indicates the portion of the allocation information that allocates the item associated with the transaction to the user of the second user device; and
receiving, based on an interaction with the interactive notification, the indication that the portion of the allocation information that allocates the item associated with the transaction to the user of the second user device is confirmed.

15. A non-transitory computer-readable medium having instructions stored thereon that, when executed by at least one computing device, causes the at least one computing device to perform the method of any of claims 1 to 7.
